# EUROPEAN PATENT SPECIFICATION

(11) **EP 1 955 306 B1**
(45) Date of publication and mention of the grant of the patent: **29.05.2013**
(21) Application number: 06816599.2
(22) Date of filing: 11.10.2006
(51) Int. Cl.: G09B 21/00

(54) **ALPHANUMERIC FONT FOR THE BLIND AND VISUALLY IMPAIRED**
ALPHANUMERISCHER SCHRIFTSATZ FÜR BLINDE UND SEHBEHINDERTE
POLICE ALPHANUMERIQUE POUR NON-VOYANTS ET MALVOYANTS

(30) Priority: 12.10.2005 US 247189
(43) Date of publication of application: 13.08.2008
(73) Proprietor: Elia Life Technology, New York, NY 10021 (US)
(72) Inventor: CHEPAITIS, Andrew, New York, NY 10021 (US)
(74) Representative: Crosby, Wendy Agnes
(86) International application number: PCT/US2006/039510
(87) International publication number: WO 2007/047251

(56) References cited:
- US-A1- 2005 106 537
- US-A1- 2005 106 537
- US-S1- D 455 776
- US-S1- D 472 265
- US-S1- D 472 265
- US-S1- D 480 750

## Description

### BACKGROUND OF THE INVENTION

### 1. Field of the Invention

The invention relates to tactile and low vision fonts for use in reading materials for the blind and visually impaired, and particularly to such fonts in which the symbols have a given an aspect ratio of less than or equal to approximately 1.25 defining a rectangular space.

### 2_{.} Related Art

Tactile alphanumeric fonts for the visually impaired and blind are known from, for example, U.S. Patent No. D321,903, U.S. Patent No. 4,737,108 and U.S. Patent No. D472, 265, all to Elia Chepaitis. The fonts disclosed in U.S. Patent No. D321,903 and U.S. Patent No. 4,737,108 are collectively referred to herein as the prior art ELIA™ font, which is owned and marketed by ELIA Life Technology.

U.S. Patent No. 4,737,108 is specifically directed to embossed symbols that represent the letters of the alphabet and the Arabic numerals 0-9, which can be traced with the fingertips. The fonts disclosed in U.S. Patent No. D321,903 and U.S. Patent No. 4,737,108 were intended to provide a system of embossed symbols that offered easily learned and readable letters and numerals, building on knowledge and skills that many visually impaired and blind people have already acquired; and to provide a system of embossed symbols that resembled the letters of the conventional Roman alphabet and the conventional Arabic numerals.

The prior art ELIA™ font was designed (in part) according to human factors engineering principles. They included, but were not limited to, a design that leverages (or addresses) potential users' existing knowledge, ease of differentiation between the end of one symbol and the beginning of the next, and interfacing neatly with existing technology. The prior art ELIA™ font also was designed to have a large amount of redundancy, in sharp contrast to Braille, which has been described as "inherently confusing (because it is)...non-redundant" (Millar, Susanna. "Perceptual and Task Factors in Fluent Braille." Perception (1987): 521-36).

All of the alphabetic and numerical symbols of the prior art ELIA™ font comprise at least one component, a frame. The alphabetic symbols of the prior art ELIA™ font are divided into four regions, the first and third regions having circular frames, and the second and fourth regions having square frames. Thus, when a reader encounters a circle, for example, he or she knows that he or she is dealing with a letter in the first or third region. All of the numerical symbols have diamond-shaped frames. The frames therefore serve as the primary key to direct the reader to a limited number of candidates, to make deciphering as swift and easy as possible. All of the alphabetic and numerical symbols except the "L" and "O" alphabetic symbols and the "0" numerical symbols also have at least one second component, an internal element consisting of a line, curve, or dot within their interior. Each of the alphabetic symbols embodies at least a physical association, and in some cases also a logical association, with its corresponding capital letter of the Roman alphabet. The most easily traced symbols are reserved for the vowels and those letters that are used most often.

Braille, the raised Roman alphabet, and other alphabets such as the Fishburne alphabet and the Moon alphabet (used in the UK, designed in 1845), do not have all of the features of the prior art ELIA™ font. Of the mentioned alphabets, only the Moon alphabet resembles some of the Roman alphabet. Instruction in the Moon alphabet is not available on a nationwide basis in the US. Fewer visually impaired use the Moon and the Fishburne alphabets than use Braille (in the US). None of these alphabets utilizes a frame for easy differentiation and all were limited by the technology available at their time of invention. Braille was efficient and became the standard because in 1826 punching bumps in a piece of paper was a very cost effective and practical way for the blind to produce their own texts. Moon was efficient because it used 14 copper bands that could be pressed into paper to produce tactile symbols, many of which are similar to the Roman alphabet letters. However, Moon's users had difficulty producing their own texts and were therefore dependent on others to assist them. Fishburne was designed to utilize users deductive reasoning skills (it is divided into simple shapes that are organized according to their order in the alphabet).

In spite of its superiority to prior art alphabets for the blind and visually impaired, the prior art ELIA™ font is not without its deficiencies. U.S. patent application No. 10/511,036, filed October 13, 2004, which has the same inventor as the present application, and which is incorporated herein by reference in its entirety, discloses dynamic tactile and low vision fonts developed to address some of these deficiencies by providing characters with element spacing and inter-letter spacing that are optimally readable at a wide range of font sizes. However, low vision and blind readers still may have some difficulty in discerning the placement and shape of the internal elements.

It is to the solution of this and other problems to which the present invention is directed.

### SUMMARY OF THE INVENTION

It is accordingly a primary object of the present invention to provide an alphanumeric font for the blind and visually impaired in which visually impaired and blind readers can more easily discern the placement and shape of the elements that distinguish different symbols from each other.

This and other objects of the present invention are achieved by the provision of a tactile alphanumeric font for use by visually impaired and blind persons comprising raised alphabetic symbols representing the letters of the conventional Roman alphabet and raised numeric symbols representing the conventional Arabic numerals. The alphabetic symbols are divided into first, second, third, and fourth regions or groups, the alphabetic symbols in the first and third regions or groups being denoted by a circular frame having an aspect ratio of less than or equal to approximately 1.25, and the alphabetic symbols in the second and fourth regions being surrounded by a square frame having an aspect ratio that is substantially the same as (that is, the same as or imperceptively different from) the circular frame. At least some of the alphabetic symbols also include an interior element inside of and separated from the frame; and at least some of the alphabetic symbols embody at least a physical association, such as a dominant characteristic, of their corresponding letter of the Roman alphabet. Uppercase symbols differentiate from the lowercase symbols only slightly, in that uppercase symbols are designated by the simple placement of a dot centrally located above the lowercase symbol frame.

The numeric symbols are surrounded by a pentagonal frame having an aspect ratio that is substantially the same as the circular and square frames. At least some of the numeric symbols also include an interior element inside of and separated from the frame; and at least some of the numeric symbols embody at least a physical association, such as a dominant characteristic, of their corresponding Arabic numeral 0-9.

In another embodiment of the invention, the symbols corresponding to the most confused letters have an aspect ratio greater than approximately 1.0 but less than or equal to approximately 1.25, while the other symbols have an aspect ratio less than that of the most confused letters, and the aspect ratios of the other symbols are substantially the same.

Other objects, features, and advantages of the present invention will be apparent to those skilled in the art upon a reading of this specification including the accompanying drawings.

### BRIEF DESCRIPTION OF THE DRAWINGS

The invention is better understood by reading the following Detailed Description of the Preferred Embodiments with reference to the accompanying drawing figures, in which like reference numerals refer to like elements throughout, and in which:
FIGURE 1 is a face view of the alphabetic symbols of the alphanumeric font in accordance with the present invention.
FIGURE 2 is a face view of the numeric symbols of the alphanumeric font of FIGURE 1.
FIGURE 3 is a face view of another embodiment of the alphabetic symbols of the alphanumeric font in accordance with the present invention.

### DETAILED DESCRIPTION OF THE PREFERRED EMBODIMENTS

In describing preferred embodiments of the present invention illustrated in the drawings, specific terminology is employed for the sake of clarity. However, the invention is not intended to be limited to the specific terminology so selected, and it is to be understood that each specific element includes all technical equivalents that operate in a similar manner to accomplish a similar purpose.

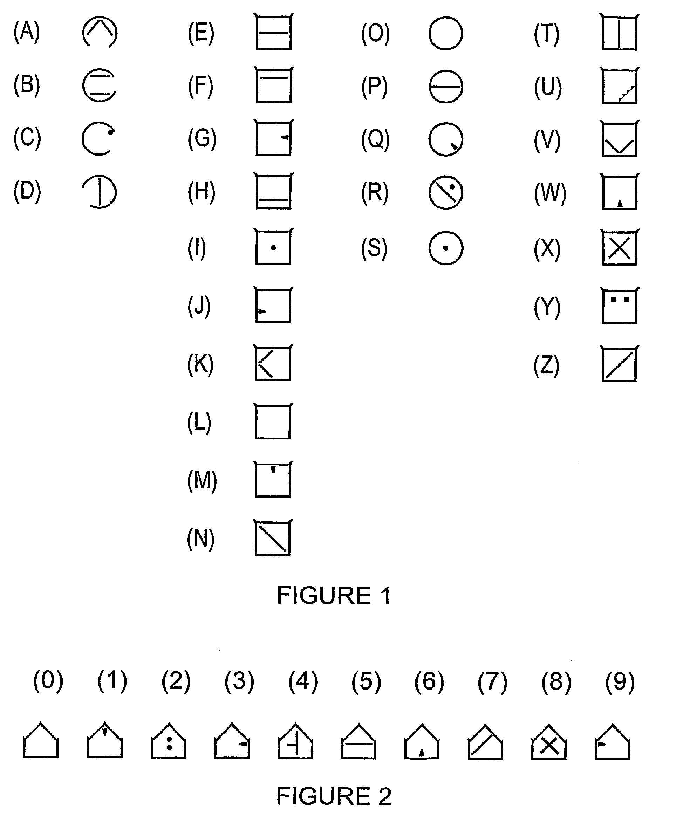

Referring now to FIGURES 1-3, the tactile alphanumeric font in accordance with the present invention for use by visually impaired and blind persons comprises raised alphabetic symbols representing the letters of the conventional Roman alphabet and raised numeric symbols representing the conventional Arabic numerals. All of the alphabetic and numerical symbols of the alphanumeric font in accordance with the present invention comprise at least a frame. As in the prior art ELIA™ font, the alphabetic symbols in accordance with the present invention are divided into four regions or groups, the first and third regions or groups having circular frames and the second and fourth regions or groups having square frames, with the frames serving as the primary key to direct the reader to a limited number of candidates, to make deciphering as swift and easy as possible. Also as in the prior art ELIA™ font, in the font according to the present invention, at least some of the alphabet and numeric symbols also include an interior element inside the frame; and at least some of the alphabet and numeric symbols embody at least a physical association, such as a dominant characteristic, of their corresponding letter of the Roman alphabet or their corresponding Arabic numeral 0-9. Uppercase alphabetic symbols differentiate from the lowercase symbols only slightly, in that uppercase symbols are designated by the simple placement of a dot centrally located above the lowercase symbol frame.

Unlike the prior art ELIA™ font, the circular and square frames of the alphabetic symbols in the font in accordance with the present invention have an aspect ratio of less than or equal to approximately 1.25, and the interior elements are separated from the frames so that the reader can readily distinguish between the interior elements and the frame. In a first embodiment of the font in accordance with the invention, as shown in FIGURE 1, the aspect ratios of all of the alphabetic symbols are substantially the same.

Also unlike the prior art ELIA™ font, the numeric symbols in the font in accordance with the present invention are surrounded by a pentagonal frame. This pentagonal frame has an aspect ratio that is substantially the same as that of the circular and square frames, and the interior elements are separated from the frames so that the reader can readily distinguish between the interior elements and the frame.

Fonts are designed to use a presentation space in a uniform way. In the font according to the first embodiment of the invention, all of the symbols have the substantially the same aspect ratio (the ratio of the width to the height) of less than or equal to approximately 1.25, such that all of the symbols have equal height and width (that is, they occupy a square space), or are wider than they are high (that is, they occupy a long rectangular space), because the inventor has found that an aspect ratio of less than or equal to 1.25 is best for tangibility (that is, the ability to be discernible by the touch). Although it is possible for the symbols to have an aspect ratio of greater than 1.25, symbols with an aspect ratio greater than approximately 1.25 would be less tangible than symbols having an aspect ration of approximately 1.25 or less.

Although it is possible for some symbols to have different aspect ratios than the rest, the use of more than two or three different aspect ratios may confuse readers, as the symbols would not have uniform spacing information within their frames. On the other hand, some symbols, particularly those corresponding to the most confused letters (F, K, U, V, W, X, and Y) may be more discernible if they have an aspect ratio of less than approximately 1.25. Thus, making the aspect ratio for the symbols corresponding to the most confused letters greater than approximately 1.25 but less than or equal to approximately 1.25, while making the aspect ratio for all the other symbols less than that of the most confused letters would provide an additional identifying frame characteristic for the most confused letters, and give readers more space inside the frame in which to navigate and identify the interior elements.

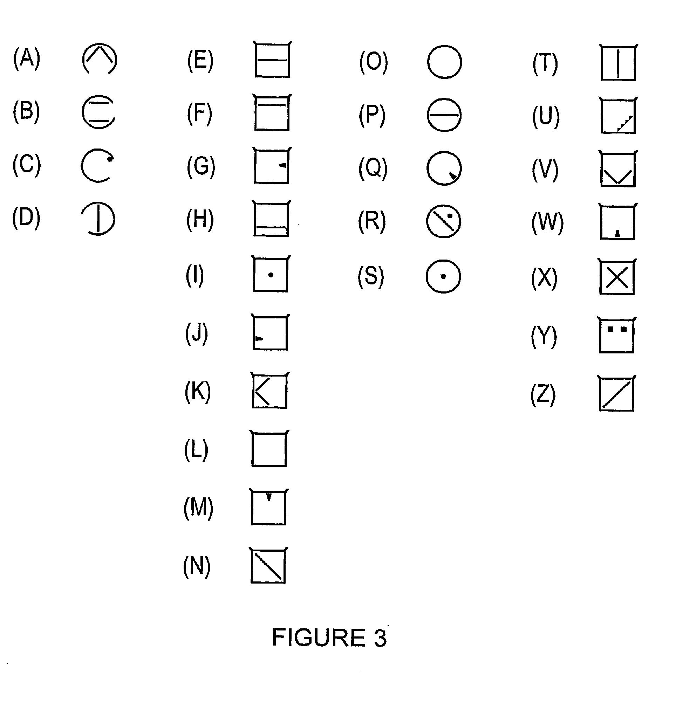

Thus, in accordance with a second embodiment of the invention, shown in FIGURE 3, the symbols corresponding to the most confused letters have an aspect ratio greater than approximately 1.0 but less than or equal to approximately 1.25, while the other symbols (including the numeric symbols) have an aspect ratio less than that of the most confused letters, and the aspect ratios of the other symbols are substantially the same.

The shape that most efficiently uses a given space is a rectangle, which uses 100% of the given rectangular space. A circle uses about 78% of a given square space, as does a right pentagon (as used herein, a pentagon in which the bottom two vertices form right angles). The diamond-shaped frames of the numeric symbols of the prior art ELIA™ font utilized only 56% of a given space, so they were inherently harder to discern. It is also possible to provide the alphabetic symbols of the first and third regions or groups with an ovate frame instead of a circular frame, as that would increase the utilization of space. Such a frame shape is believed to have a marginal tactile benefit as compared to a circular frame, but also is considered to be aesthetically less visually attractive.

In the font in accordance with the present invention, at least one corner, preferably two corners, and more preferably, the top left and right corners of the square frames have outwardly extending, ear-like projections. The purpose of the ears is to allow readers to more quickly and accurately identify the difference between circular and square frames. The ears enable the reader to more confidently identify a corner. If the reader feels an eared corner, then he or she knows the frame is a square and does not have to trace the rest of the frame. Otherwise, if there is no corner, the reader knows that the frame is circular. For example, if a reader feels an eared corner, she or he can proceed to the interior of the frame to discern the correct letter. To the reader, the frame then only serves as a frame of reference so he or she cannot stray into another symbol. The frame also continues to give spacing information (i.e. how far the interior element is from the top, bottom, or sides). Circle/square errors (that is, errors in identifying whether a frame is a circle or a square) accounted for about 33% of all reading errors before the ears were added. The ears have reduced circle/square errors to about 14% of all errors.

For symbols in the second and fourth regions (that is, alphabetic symbols with square frames and at least one projecting "ear," the spacing between symbols is calculated from the free end of the "ears." While the ears increase the amount of space taken up by symbols with square frames, the resulting eared symbols are still easier to distinguish than a pure square having the same height and width. Furthermore, the "overhang" of the ears is not wasted as one might imagine, because the eared symbols can be placed as close together as if the symbols had no ears (perhaps because the space below the ears is not used). For example, if a user's threshold letter spacing for square letters without ears was 0.5 cm, the threshold spacing with ears would also be 0.5 cm vertical frame -to- vertical frame (that is, 0.5 cm between vertical edges of two adjacent letters), or less than 0.5 ear-to-ear.

The frames of the alphabetic symbols for the letters A-D have openings in them so that a reader can more easily differentiate them from the alphabetic symbols for the letters O-S. The openings both reduce errors and speed up identification, as the reader can reduce the number of possibilities from as many as nine (the circular-framed alphabetic symbols for the letters A-D and O-S) to as few as four. Confusions between these two regions' symbols accounted for 9% of total errors before the openings were added. They are now 3%.

In the prior art ELIA™ font as shown in U.S. Patent No. D480,750, the frames of the second region of square-framed symbols also were provided with openings. However, through testing, it was found that openings in the square frames did not result in improvements in tangibility. Readers found it difficult to discern where letters began and ended when openings were included in the square frames. This counterintuitive result may be due to readers interpreting the end of a straight line to mean the end of a frame, whereas the path of a circle continues to guide the readers even after they have encountered an opening in it.

As a result of the above-described changes in configuration from the alphabetic symbols of the prior art ELIA™ font, errors are now are less randomly distributed, meaning that the readers are better able to make an educated guess at the interpreting the alphabetic symbols. For example, if 50% of an ELIA™ font reader's errors were between E and P (square vs. circular framed symbols), that would be more desirable than if that reader read another raised alphabet and his or her top 50% of errors were distributed across five different letter pairs.

As discussed above, in the font in accordance with the present invention, the interior elements, inside the frames, are separated from the frame so that the reader can distinguish between the interior elements and the frame. As the frames of the prior art ELIA™ font were easily distinguishable from each other, the interior elements cause the most reading errors. Separating the interior elements from the frame as in the font of the present invention, provides the readers with additional space around those interior elements so that the reader can better discern the placement and shape of the interior elements.

Also, the separation between the frame and the interior element provides additional open space within the frame. Maximizing the open space in the symbols is essential so that the reader can decide the shape of the open space. Readers feel the shape of the open spaces as much as the placement and shape of the interior elements.

Still further, the separation between the frame and the interior element increases the surface area of the raised contours of the symbol, improving their tangibility (the ability to discern with touch).

As in the prior art ELIA™ font, all of the alphabetic and numerical symbols except the "L" and "O" alphabetic symbols and the "0" numerical symbol have at least one interior element. In the font in accordance with the present invention, the at least one interior element comprises one of a line, a dot, and a shape that is substantially triangular (that is, short trapezoid or triangle shapes).

More specifically, the interior elements of the alphabetic symbols representing the letters G, J, M, Q, and W all have shapes that are substantially triangular, which enable the reader to feel that the interior elements extend toward the edge of the frame. These trapezoid or triangle shapes help readers to distinguish the interior elements of the G, J. M, Q, and W alphabetic symbols from the interior elements of the I and S alphabetic symbols, which are in the shape of small, circular dots. If the interior elements of the G, J. M, Q, and W alphabetic symbols were straight, the innermost thin edge would block the finger's distal pads' sensors so that the sensors would have difficulty distinguishing the parts of the interior element that were closer to the frame's edge. With a wider edge close to the frame, new distal pad sensors are engaged as the finger moves over the interior element and the reader has greater ability to discern the rest of the interior element.

The interior elements of the G, J. M, Q, and W alphabetic symbols are further distinguished from the interior elements of the I and S alphabetic symbols in that they do not extend to the middle of the frame.

The R alphabet symbol now has a second interior element, a dot in the upper right quadrant of the circular frame, in addition to a diagonal line, so that it cannot be confused with the P or D alphabetic symbols (which respectively have horizontal and vertical line interior elements) if the reader's paper becomes slightly skewed. The U alphabet symbol has a jagged line interior element (rather than a smooth line interior element), as a jagged line increases surface area. The jagged line could be used throughout the font in place of the smooth line, to increase surface area, although the advantage of increased surface area may be offset by the disadvantage of additional drag, which could at some point overwhelm the reader's tactile senses.

The top right and left corners of the pentagonal frames of the numeric symbols have upwardly-extending ears that accentuate and help distinguish the corners of these obtuse angles. The vertical lines of the frame extend up to a height that is greater than 30% of the total height, to maximize the available open area inside the frame. The two upper most lines can be straight or slightly curved, it does not make a large difference. Competitors might use a bow in any of the lines to differentiate their product.

The interior elements of the 1, 2, 4, and 7 numeric symbols have changed relative to those of the prior art ELIA™ font to maximize internal space and eliminate as much clutter as possible. The 1, 4, and 7 numeric symbols of the font in accordance with the present invention resemble their Arabic counterparts, but with clearer, smaller or fewer lines. The interior element of the numeric symbol representing the numeral 2 is two dots, for obvious reasons.

The interior elements of the numeric symbols representing the numerals 1, 3, 6, and 9 have the same short trapezoid or triangle shape as the interior elements of the alphabetic symbols representing the letters G, J, M, Q, and W. Further, the interior elements of the numeric symbols representing the numerals 1, 3, 6, and 9 are positioned the same as the interior elements of the alphabetic symbols representing the letters M, G, W, and J, respectively.

It is to be understood that the present invention is not limited to the illustrated user interfaces or to the order of the user interfaces described herein. Various types and styles of user interfaces may be used in accordance with the present invention without limitation.

Modifications and variations of the above-described embodiments of the present invention are possible, as appreciated by those skilled in the art in light of the above teachings. It is therefore to be understood that, within the scope of the appended claims and their equivalents, the invention may be practiced otherwise than as specifically described.

## Claims

1. A tactile alphanumeric font for the blind and visually impaired comprising a plurality of alphabetic symbols representing the letters of the Roman alphabet, the alphabetic symbols being grouped into first, second, third, and fourth regions, the alphabetic symbols of the first and third regions having circular frames, the alphabetic symbols of the second and fourth regions having square frames, at least some of the alphabetic symbols having interior elements inside of the frames, and at least some of the alphabetic symbols embodying at least a physical association, of their corresponding letter of the Roman alphabet wherein:
all of the interior elements of the alphabetic symbols are separated from the frames and/or at least one corner of the square frames has an outwardly extending, ear-like projection.

2. The font of claim 1, further comprising a plurality of numeric symbols having pentagonal frames, at least some of the numeric symbols having interior elements inside of the pentagonal frames, and at least some of the numeric symbols embodying at least a physical association of their corresponding Arabic numeral 0-9.

3. The font of claim 1 or 2, wherein the square frames are unbroken, without openings.

4. The font of claim 1 or 2, wherein:
the alphabetic symbols of the first region represent the letters A, B, C, and D,
the frames of the first region have openings therein,
the alphabetic symbols of the third region represent the letters O, P, Q, R, and S, and
the frames of third region are unbroken, without openings.

5. The font of claim 1 or 2, wherein the interior elements of some of the alphabetic symbols have shapes that are substantially triangular.

6. The font of claim 5, wherein the substantially triangular interior elements do not extend into the middle of the frame.

7. The font of claim 1 or 2, wherein the interior elements of the alphabetic symbols representing the letters G, J, M, Q, and W all have shapes that are substantially triangular.

8. The font of claim 7, wherein the substantially triangular interior elements do not extend into the middle of the frame.

9. The font of claim 1 or 2, wherein the interior element of the alphabetic symbol representing the letter U includes a jagged line.

10. The font of claim 1 or 2, wherein the interior elements of at least some of the alphabetic symbols comprise at least one jagged line.

11. The font of claim 1 or 2, wherein two corners of the square frames have outwardly extending, ear-like projections.

12. The font of claim 1 or 2, wherein the top left and right corners of the square frames have outwardly extending, ear-like projections.

13. The font of claim 2, wherein the interior elements of the numeric symbols representing the numerals 1, 3, 6, and 9 all have shapes that are substantially the same as the interior elements of the alphabetic symbols representing the letters G, J, M, Q, and W.

14. The font of claim 2, wherein all of the alphabetic and numerical symbols except the "L" and "O" alphabetic symbols and the "0" numerical symbols have at least one interior element, and wherein the at least one interior element comprises one of a line, a dot, and a shape that is substantially triangular.

15. The font of claim 2, wherein all of the alphabetic and numerical symbols have substantially the same aspect ratio, and wherein the aspect ratio is less than or equal to approximately 1.25.

16. The font of claim 2, wherein the alphabetic symbols corresponding to the most confused letters have an aspect ratio greater than approximately 1.0 but less than or equal to approximately 1.25, while the other symbols, including the numeric symbols, have an aspect ratio less than that of the alphabetic symbols corresponding to the most confused letters, and the aspect ratios of the other symbols are substantially the same.

17. The font of claim 1, wherein some but not all of the circular frames have openings therein.

## Patentansprüche

1. Ein alphanumerischer Tastschriftsatz für Blinde und Sehbehinderte, der eine Vielzahl von alphabetischen Symbolen beinhaltet, die die Buchstaben des lateinischen Alphabets repräsentieren, wobei die alphabetischen Symbole in einen ersten, zweiten, dritten und vierten Bereich gruppiert sind, wobei die alphabetischen Symbole des ersten und dritten Bereichs kreisförmige Rahmen aufweisen, die alphabetischen Symbole des zweiten und vierten Bereichs quadratische Rahmen aufweisen, mindestens manche der alphabetischen Symbole Innenelemente innerhalb der Rahmen aufweisen und mindestens manche der alphabetischen Symbole mindestens eine physische Assoziation mit ihrem entsprechenden Buchstaben des lateinischen Alphabets verkörpern, wobei:
alle Innenelemente der alphabetischen Symbole von den Rahmen getrennt sind und/oder mindestens eine Ecke der quadratischen Rahmen einen sich auswärts erstreckenden, ohrenartigen Vorsprung aufweist.

2. Schriftsatz gemäß Anspruch 1, der ferner eine Vielzahl von numerischen Symbolen, die fünfeckige Rahmen aufweisen, beinhaltet, wobei mindestens manche der numerischen Symbole Innenelemente innerhalb der fünfeckigen Rahmen aufweisen und mindestens manche der numerischen Symbole mindestens eine physische Assoziation mit ihrer entsprechenden arabischen Zahl 0-9 verkörpern.

3. Schriftsatz gemäß Anspruch 1 oder 2, wobei die quadratischen Rahmen durchgehend, ohne Öffnungen, sind.

4. Schriftsatz gemäß Anspruch 1 oder 2, wobei:
die alphabetischen Symbole des ersten Bereichs die Buchstaben A, B, C und D repräsentieren,
die Rahmen des ersten Bereichs Öffnungen darin aufweisen,
die alphabetischen Symbole des dritten Bereichs die Buchstaben O, P, Q, R und S repräsentieren und
die Rahmen des dritten Bereichs durchgehend, ohne Öffnungen, sind.

5. Schriftsatz gemäß Anspruch 1 oder 2, wobei die Innenelemente mancher der alphabetischen Symbole Formen aufweisen, die im Wesentlichen dreieckig sind.

6. Schriftsatz gemäß Anspruch 5, wobei sich die im Wesentlichen dreieckigen Innenelemente nicht in die Mitte des Rahmens erstrecken.

7. Schriftsatz gemäß Anspruch 1 oder 2, wobei die Innenelemente der alphabetischen Symbole, die die Buchstaben G, J, M, Q und W repräsentieren, jeweils Formen aufweisen, die im Wesentlichen dreieckig sind.

8. Schriftsatz gemäß Anspruch 7, wobei sich die im Wesentlichen dreieckigen Innenelemente nicht in die Mitte des Rahmens erstrecken.

9. Schriftsatz gemäß Anspruch 1 oder 2, wobei das Innenelement des alphabetischen Symbols, das den Buchstaben U repräsentiert, eine gezackte Linie umfasst.

10. Schriftsatz gemäß Anspruch 1 oder 2, wobei die Innenelemente mindestens mancher der alphabetischen Symbole mindestens eine gezackte Linie beinhalten.

11. Schriftsatz gemäß Anspruch 1 oder 2, wobei zwei Ecken der quadratischen Rahmen sich auswärts erstreckende, ohrenartige Vorsprünge aufweisen.

12. Schriftsatz gemäß Anspruch 1 oder 2, wobei die obere rechte und linke Ecke der quadratischen Rahmen sich auswärts erstreckende, ohrenartige Vorsprünge aufweisen.

13. Schriftsatz gemäß Anspruch 2, wobei die Innenelemente der numerischen Symbole, die die Zahlen1, 3, 6 und 9 repräsentieren, jeweils Formen aufweisen, die im Wesentlichen dieselben sind wie die Innenelemente der alphabetischen Symbole, die die Buchstaben G, J, M, Q und W repräsentieren.

14. Schriftsatz gemäß Anspruch 2, wobei alle alphabetischen und numerischen Symbole, abgesehen von den alphabetischen Symbolen "L" und "O" und dem numerischen Symbol "0", mindestens ein Innenelement aufweisen und wobei das mindestens eine Innenelement eines von einer Linie, einem Punkt und einer im Wesentlichen dreieckigen Form beinhaltet.

15. Schriftsatz gemäß Anspruch 2, wobei alle alphabetischen und numerischen Symbole im Wesentlichen dasselbe Seitenverhältnis aufweisen und wobei das Seitenverhältnis weniger als oder gleich ungefähr 1,25 ist.

16. Schriftsatz gemäß Anspruch 2, wobei die alphabetischen Symbole, die den am meisten verwechselten Buchstaben entsprechen, ein Seitenverhältnis von größer als ungefähr 1,0, aber kleiner als oder gleich ungefähr 1,25 aufweisen, während die anderen Symbole, einschließlich der numerischen Symbole, ein Seitenverhältnis von kleiner als jenes der alphabetischen Symbole, die den am häufigsten verwechselten Buchstaben entsprechen, aufweisen und die Seitenverhältnisse der anderen Symbole im Wesentlichen gleich sind.

17. Schriftsatz gemäß Anspruch 1, wobei manche, aber nicht alle der kreisförmigen Rahmen Öffnungen darin aufweisen.

## Revendications

1. Une police d'écriture alphanumérique tactile pour les personnes aveugles et malvoyantes comprenant une pluralité de symboles alphabétiques représentant les lettres de l'alphabet romain, les symboles alphabétiques étant regroupés en des première, deuxième, troisième et quatrième régions, les symboles alphabétiques des première et troisième régions ayant des cadres circulaires, les symboles alphabétiques des deuxième et quatrième régions ayant des cadres carrés, au moins certains des symboles alphabétiques ayant des éléments intérieurs au-dedans des cadres, et au moins certains des symboles alphabétiques exprimant au moins une association physique, de leur lettre correspondante de l'alphabet romain dans laquelle :
tous les éléments intérieurs des symboles alphabétiques sont séparés des cadres et/ou au moins un coin des cadres carrés a une saillie en oreille s'étendant vers l'extérieur.

2. La police d'écriture de la revendication 1, comprenant en outre une pluralité de symboles numériques ayant des cadres pentagonaux, au moins certains des symboles numériques ayant des éléments intérieurs au-dedans des cadres pentagonaux, et au moins certains des symboles numériques exprimant au moins une association physique de leur chiffre arabe 0 à 9 correspondant.

3. La police d'écriture de la revendication 1 ou la revendication 2, dans laquelle les cadres carrés sont en trait plein, sans ouvertures.

4. La police d'écriture de la revendication 1 ou la revendication 2, dans laquelle :
les symboles alphabétiques de la première région représentent les lettres A, B, C, et D,
les cadres de la première région ont des ouvertures dans ceux-ci,
les symboles alphabétiques de la troisième région représentent les lettres O, P, Q, R, et S, et
les cadres de la troisième région sont en trait plein, sans ouvertures.

5. La police d'écriture de la revendication 1 ou la revendication 2, dans laquelle les éléments intérieurs de certains des symboles alphabétiques ont des formes qui sont substantiellement triangulaires.

6. La police d'écriture de la revendication 5, dans laquelle les éléments intérieurs substantiellement triangulaires ne s'étendent pas jusque dans le milieu du cadre.

7. La police d'écriture de la revendication 1 ou la revendication 2, dans laquelle les éléments intérieurs des symboles alphabétiques représentant les lettres G, J, M, Q, et W ont tous des formes qui sont substantiellement triangulaires.

8. La police d'écriture de la revendication 7, dans laquelle les éléments intérieurs substantiellement triangulaires ne s'étendent pas jusque dans le milieu du cadre.

9. La police d'écriture de la revendication 1 ou la revendication 2, dans laquelle l'élément intérieur du symbole alphabétique représentant la lettre U inclut un trait dentelé.

10. La police d'écriture de la revendication 1 ou la revendication 2, dans laquelle les éléments intérieurs d'au moins certains des symboles alphabétiques comprennent au moins un trait dentelé.

11. La police d'écriture de la revendication 1 ou la revendication 2, dans laquelle deux coins des cadres carrés ont des saillies en oreille s'étendant vers l'extérieur.

12. La police d'écriture de la revendication 1 ou la revendication 2, dans laquelle les coins en haut à gauche et à droite des cadres carrés ont des saillies en oreille s'étendant vers l'extérieur.

13. La police d'écriture de la revendication 2, dans laquelle les éléments intérieurs des symboles numériques représentant les chiffres 1, 3, 6, et 9 ont tous des formes qui sont substantiellement les mêmes que les éléments intérieurs des symboles alphabétiques représentant les lettres G, J, M, Q, et W.

14. La police d'écriture de la revendication 2, dans laquelle tous les symboles alphabétiques et numériques à l'exception des symboles alphabétiques « L » et « O » et des symboles numériques « 0 » ont au moins un élément intérieur, et dans laquelle cet au moins un élément intérieur comprend soit un trait, soit un point, soit une forme qui est substantiellement triangulaire.

15. La police d'écriture de la revendication 2, dans laquelle tous les symboles alphabétiques et numériques ont substantiellement le même rapport d'aspect, et dans laquelle le rapport d'aspect est inférieur ou égal à approximativement 1,25.

16. La police d'écriture de la revendication 2, dans laquelle les symboles alphabétiques correspondant aux lettres les plus confondues ont un rapport d'aspect supérieur à approximativement 1,0 mais inférieur ou égal à approximativement 1,25, tandis que les autres symboles, y compris les symboles numériques, ont un rapport d'aspect inférieur à celui des symboles alphabétiques correspondant aux lettres les plus confondues, et les rapports d'aspect des autres symboles sont substantiellement les mêmes.

17. La police d'écriture de la revendication 1, dans laquelle une partie mais pas tous les cadres circulaires ont des ouvertures dans ceux-ci.
